(19) **Europäisches Patentamt**
**European Patent Office**
**Office européen des brevets**

(11) **EP 2 278 732 B1**

(12) **EUROPEAN PATENT SPECIFICATION**

(45) Date of publication and mention
of the grant of the patent:
**10.08.2016 Bulletin 2016/32**

(51) Int Cl.:
**H04B 7/185** (2006.01)

(21) Application number: **10005834.6**

(22) Date of filing: **07.06.2010**

(54) **System and method for enabling fast and seamless handover for air-to-ground communication**

System und Verfahren zur Ermöglichung einer schnellen und nahtlosen Leitungsübergabe für Luft-Boden-Kommunikation

Système et procédé pour activer le transfert rapide et sans interruption pour communication air-sol

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(30) Priority: **06.07.2009 IL 19971209**

(43) Date of publication of application:
**26.01.2011 Bulletin 2011/04**

(73) Proprietor: **Deutsche Telekom AG**
**53113 Bonn (DE)**

(72) Inventors:
• **Ben-Shimol, Yehuda**
**Beer Sheva 84750 (IL)**
• **Kitroser, Itzik**
**Beer Sheva 84265 (IL)**
• **Einsiedler, Hans Joachim**
**13189 Berlin (DE)**
• **Kadel, Gerhard**
**64293 Darmstadt (DE)**

(74) Representative: **Flaccus, Rolf-Dieter**
**Flaccus · Müller-Wolff**
**Patentanwälte**
**Bussardweg 10**
**50389 Wesseling (DE)**

(56) References cited:
**US-A1- 2006 229 104**

• **TOSKALA A ET AL: "ETSI WCDMA for UMTS", SPREAD SPECTRUM TECHNIQUES AND APPLICATIONS, 1998. PROCEEDINGS., 1998 IEEE 5TH INTERNATIONAL SYMPOSIUM ON SUN CITY, SOUTH AFRICA 2-4 SEPT. 1998, NEW YORK, NY, USA,IEEE, US, vol. 2, 2 September 1998 (1998-09-02), pages 616-620, XP010307568, DOI: 10.1109/ISSSTA.1998.723859 ISBN: 978-0-7803-4281-1**
• **LONGONI F ET AL: "WCDMA for UMTS: Radio Access Network Architecture", 1 January 2000 (2000-01-01), PROCEEDINGS OF THE 39TH. IEEE CONFERENCE ON DECISION AND CONTROL. (CDC). SYDNEY, AUSTRALIA, DEC. 12 - 15, 2000; [IEEE CONFERENCE ON DECISION AND CONTROL], NEW YORK, NY : IEEE, US, PAGE(S) 53 - 71, XP002228672, ISBN: 978-0-7803-6639-8 * figures 5.2,5.3,5.4 ***

## Description

Field Of The Invention

The present invention relates to a handover process in wireless communication networks between ground base stations and aircraft. More particularly, the present invention relates to a system and method for enabling fast and seamless handover for Air-to-Ground communication systems.

Background of the Invention

Wireless communication networks in air-to-ground communication systems provide communication channels for passengers located onboard aircraft to enable standard Internet applications (such as voice, video and data) and email communications while the aircraft is moving along its flight plan from the originating airport to the destination airport.

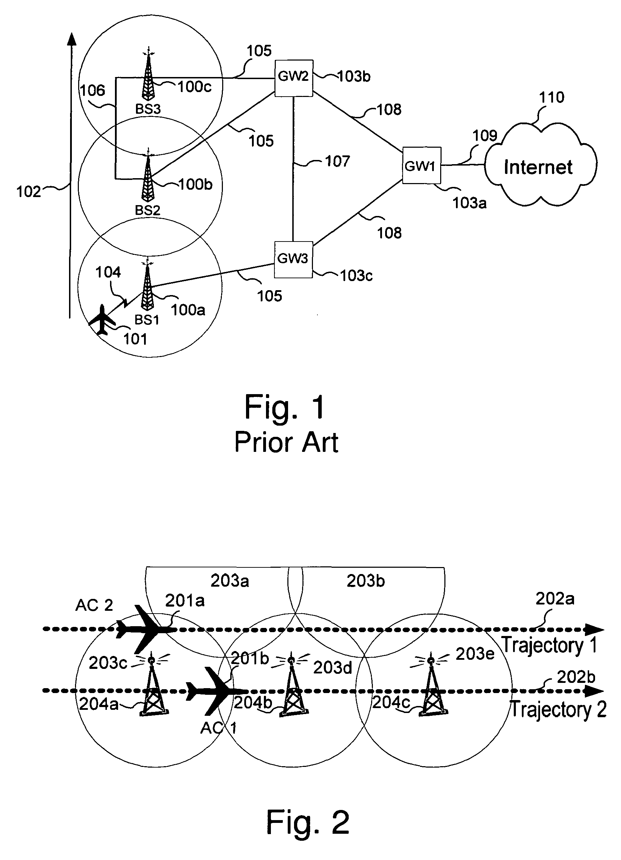

Typically, as illustrated in Fig. 1, a wireless air-to-ground communication network may include an aircraft 101 flying along flight path 102, a plurality of ground base stations (GBS or BS) 100a, 100b and 100c, and plurality of gateway stations (GW) 103a, 103b and 103c. The aircraft 101 is in communication with the ground base stations through communication channel 104. Each gateway station may be connected to a plurality of ground base stations through communication channels 105 or to other gateway stations through communication channel 108 or 107. The different ground base stations can communicate with each other through communication channels 106. It is common that each ground base station covers a certain geographical area. When the aircraft is within the covered area of a particular ground base station, the aircraft connects to that ground base station through a channel 104 effected using a certain wireless terrestrial communication technology (radio or optical). For a specified Aircraft, the current ground base station, to which it is connected, is called the serving ground base station.

As in state of the art wireless technologies supporting mobility on the ground, the aircraft can move from a geographical area covered by a certain ground base station to a geographical area covered by another ground base station. The new ground base station towards which the aircraft is moving is named the target ground base station, and changing between a serving ground base station to a target ground base station is called "handover".

The air-to-ground wireless communication network includes aircraft moving at a high velocity (generally in excess of 500 mph); and, this means that handover events, which occur when changing from the geographical area covered by one ground base station to another ground base station, can occur with high frequency and hence are required to be made in a timely manner. Unlike terrestrial communication systems, in air-to-ground communication systems, the trajectories of the aircraft moving from originating airports to destination airports are known in advance up to a certain precision level. This allows the communication system to know in advance all the ground base stations along the flight plan of a specific aircraft.

Fig.2 illustrates the situation when two aircraft 201a and 201b are moving along different flight plans (or trajectories) 202a and 202b. As can be seen, aircraft 201b is moving along trajectory 202b and must switch (i.e. handover) between three geographical areas (203c, 203d and 203e), while aircraft 201a is moving along trajectory 201a and must switch between five geographical areas (203c, 203a, 203d, 203b and 203e).

The problem is to perform fast and seamless handover in order to have service continuity to the passengers onboard the aircraft using the communication system for Internet-based services and email communications, including, but not restricted to, voice, video and data communication services.

Some wireless terrestrial communication systems such as Institute of Electrical and Electronics Engineers (IEEE) 802.16e communication systems and 3GPP Long Term Evaluation (LTE) and LTE provide means of performing efficient and seamless handover procedures.

In IEEE 802.16e, a scheme of Fast Base Station Switching (FBSS) is defined, such that the mobile station maintains a group of base stations (BSs) called a Diversity Set. The mobile station exchanges signals only with one BS, which is named as an Anchor BS among the BSs in the diversity set. The mobile station may change the anchor BS using some selection scheme. The mobile station manages its relevant diversity set by using some criterion to exclude a BS from the diversity set or by using some criterion to add a new BS to the diversity set. In order to perform handover between different BSs in a diversity set, the BSs involved must be synchronized based on a common time source, must operate at the frequency channel and are also required to share or transfer Medium Access Control (MAC) context. Such context includes all of the information that the mobile station and the BS normally exchange during network entry.

In LTE, the means of providing efficient handover and reducing data lost during handover are defined. One such mechanism is bi-casting, where the serving gateway bi-casts or multi-casts data packets to a set of eNBs (E-UTRAN NodeB), including the serving eNB, which are candidates for being the next serving eNB. Another such mechanism is buffer forwarding. In buffer forwarding, once the handover decision is taken, the source eNB forwards buffered data for the user equipment to the target eNB.

Park (US Patent Publication 2007/0218842) is concerned with the handover from a serving base station to a target base station for land based mobile phone users. In particular, it teaches a system and method for updating a diversity set between a serving anchor base station and a mobile station during handover in a communication system. The Base Station transmits a base station diversity set, or the base station diversity set and a base station recommended set to a Mobile Station, and generates a temporary base station diversity set including base stations which are included in the base station diversity set and the base station recommended set, thereby enabling handover even though a diversity set discrepancy between the Base Station and the Mobile Station occurs. It may be appreciated that standard automobiles travel at no more than about 60 mph and pedestrian mobile users move considerably more slowly. The Park method would not work for fast moving mobile users in an aircraft, which generally may be traveling more than ten times faster than an automobile and more than 200 times faster than a person on foot. For an aircraft a much faster handover is required. Any discrepancy in the diversity set results in a loss of communication, because the aircraft is traveling so fast.

Vesterinen (US Patent Publication 2008/0188223) is likewise concerned with the handover from a serving base station to a target base station for land based mobile phone users. It teaches a system for performing a handover of mobile equipment from a source network to a target network in a mobile telecommunication system. The specific problem raised by Vesterinen is downlink data information loss during the handover process due to detachment of the user from source network while moving to a target network. Specifically, this publication is concerned with scenarios of Inter-Network handover between 3GPP LTE/SAE and 3GPP 2G/3G (second generation/third generation) networks. Data, which may be transferred via the source network to the mobile equipment when it is linked to the source network, are buffered in a network element in case a need for a handover arises. The data buffered in the network element is forwarded from the network element to the target network for transferring them to the mobile equipment after it has been linked to the target network.

US 2006/229104 A1 defines communication between mobile vehicles and Base Transceiver Stations (BTS) by employing a beam forming directional antenna methods. The Air-to-ground communication model is based on UMTS as baseline technology and specifically a soft-handoff model. The Aircraft must know in advance the specific location of the targeted BTSs so that the antenna controller will be able to create directional beams to two BTSs and enable soft handoff method of switching between BTS (i.e., make-before-break). The known trajectory is used to obtain the position of a target BTS and to be able to establish a directional beam communication to facilitate, among other things, the soft handoff procedure. Selection of the target BTS is done by employing a "closest BTS" algorithm based on distance based metric or by a signal quality based metric "best signal/interference (S/I) ratio" or best S/I based on a pre-calculated lookup tables. The proposal is specific to the case of communicating with two BTSs during the soft handoff process, where one beam is targeting the active BTS and the second is directed to the target BTS. The system must be aware of the location of all BTSs to enable selection of appropriate target BTS according to the criteria mentioned above.

None of the known prior art involves a fast handover for fast moving mobile stations, like aircraft.

It is therefore a purpose of the present invention to provide a continuous communication channel when an aircraft is handed over from one ground base station to another.

It is another object of the present invention to address the problem of seamless and fast handover in air-to-ground wireless communication network by means of maintaining a plurality of ground base stations along a known trajectory (or flight plan) of an aircraft, such that all the ground base stations are synchronized.

It is another object of the present invention to define means of synchronization between ground base stations in terms of transmission buffers and protocol state.

Further purposes and advantages of this invention will appear as the description proceeds.

## Summary Of The Invention

In a first aspect the invention is a method for fast and seamless handover in wireless communications between ground base stations and aircraft. The method comprises the steps of:

> a. identifying ground base stations along the flight path of the aircraft;
> b. defining a group of active ground base stations in a geographic area in which the aircraft is traveling;
> c. using a load balancing method to select for said aircraft a serving ground base station from amongst said group of active ground base stations;
> d. maintaining communications between a serving base station in the group of active ground base stations and the aircraft; and
> e. synchronizing all active ground base stations such that all ground to air data is forwarded to all of said active ground base stations.

Embodiments of the method of the invention further comprise the steps of:

a. identifying new target ground base stations when the aircraft approaches a new geographic area along the flight path;

b. adding the newly identified target ground base stations to the group of active ground base stations; and

c. deleting from the group of active ground base stations ground base stations that have already been passed on the flight path.

In embodiments of the method of the invention all active ground base stations are synchronized and all ground to air data is forwarded to all of the active ground base stations. The serving ground base station for a given aircraft can be selected from among the group of active ground base stations by either a gateway station or by a Management Entity.

In embodiments of the method of the invention the decision regarding ground base station selection per aircraft is made in advance in an "offline" manner based on the expected flight plans of all the aircraft expected to fly over a given geographical region. In other embodiments of the method of the invention online data concerning changes in trajectory or velocity are sent from the aircraft via the ground stations to the gateway computer and Management Entity, either of which is able to re-assign the aircraft to different ground stations.

In embodiments of the method of the invention the serving ground base station per aircraft is selected from an active ground base station that is serving the fewest other aircraft. A load balancing method can be used to select per aircraft a serving ground base station from the group of active ground base stations.

In a second aspect the invention is a system for fast and seamless handover in wireless communications between ground base stations and an aircraft. The system comprises the following entities:

a. a Management Entity;

b. a plurality of gateway stations along the flight path of an aircraft;

c. a plurality of ground base stations along the flight path of the aircraft;

d. communication links between the entities comprising the system.

According to the invention, a group of active ground base stations including a serving base station is located in a geographic area in which the aircraft is traveling and all ground to air data is forwarded by a gateway station to all ground base stations in the group.

All the above and other characteristics and advantages of the invention will be further understood through the following illustrative and non-limitative description of preferred embodiments thereof, with reference to the appended drawings.

### Brief Description Of The Drawings

- Fig. 1 is a diagram illustrating an example of a prior art network topology of an air-to-ground wireless communication system;
- Fig. 2 is a diagram illustrating two possible trajectories of an aircraft;
- Fig. 3 is a diagram illustrating an example of a network topology of an air-to-ground wireless communication system according to the present invention;
- Fig. 4 is flow chart illustrating the flow of handover and addition of a new ground base stations and synchronizing it with the aircraft;
- Fig. 5 is a diagram showing a network of ground base stations and multiple aircraft flight paths;
- Fig. 6 is a graph showing two aircraft and their trajectories;
- Fig. 7 is bi-partite graph showing solutions to the problem of load balancing for a particular set of aircraft and a set of ground base stations; and
- Fig. 8 is a flow chart illustrating the load balancing process according to an embodiment of the invention.

### Detailed Description of Embodiments of the Invention

As contemplated by the herein invention, seamless and fast handover in a air-to-ground wireless communication network is accomplished by means of maintaining an active group from a plurality of ground base stations along a known trajectory (or flight plan) of an aircraft and synchronizing communication between all the ground base stations in the active group.

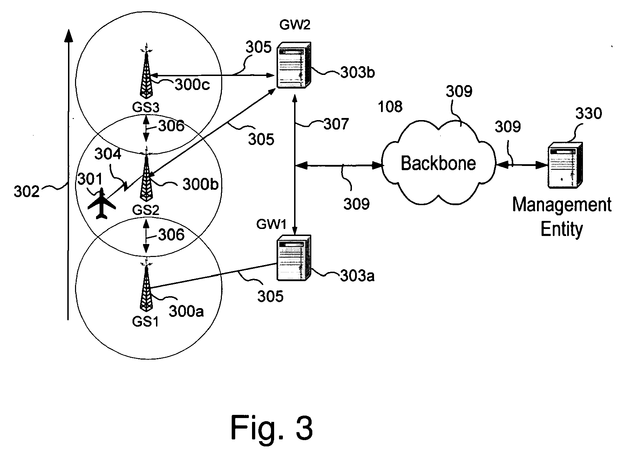

Fig. 3 is a diagram illustrating an example of a network topology of an air-to-ground wireless communication system according to the present invention. The wireless air-to-ground communication network may include an aircraft 301 flying along flight path 302, a plurality of ground base stations (GBS or GS) 300a, 300b, 300c, and ... 300n and a plurality of gateway stations (GW) 303a, 103b and ... 303n. At any given time, the aircraft 301 is in communication with one or more ground base stations through communication channel 304. The ground base stations can communicate with each other through communication channels 306. Each gateway station may be connected to a plurality of ground base stations through communication channels 305 or to other gateway stations through communication channel 307. The gateway stations can communicate with the Management Entity 330 through the operator's network (backbone) 309.

In particular at any given time, more than one ground base station will be synchronized with the aircraft along the trajectory or flight plan of the ground base station. Using Fig, 2 as an example, this means that for aircraft 201a all the ground base stations in geographical areas 203c, 203a, 203d, 203b and 203e may be synchronized and for aircraft 201b all the ground base stations in geographical areas 203c, 203d, and 203e may be synchronized.

Synchronization means that all ground to air data will be forwarded by the gateway to all currently active ground base stations for example by means of multicasting or a similar method known in the art. If needed, gateway stations will forward such data to other gateway stations and than to the relevant ground base station (e.g., GW1 or GW2 in Fig. 3). More particularly, as shown in Fig. 3, gateway stations 303a and 303b communicate along communication lines 307. Then, each gateway station communicates with each ground base station in its area by means of communications channels 305. One of the gateway stations, for example GW1 (103a), communicates with the Management Entity 330 via backbone 309.

In addition, all MAC information, including MAC state machines such as ARQ (Automatic Repeat reQuest) and/or encryption state machines, will be synchronized between all ground base stations currently active.

When the handover event from one serving ground base station to the new serving ground base station along the flight path occurs, the old serving ground base station is excluded from the active group and the next ground base station along the trajectory or flight plan is added to the active group. In particular, since the flight plan is known, the various gateway stations and ground base stations along the route are necessarily also known. Initially, all the gateway stations and ground base stations along the initial route for a certain defined distance are deemed active and synchronized. Then, as each handover occurs, the gateway stations and ground base stations that were passed and are no longer in communication with the aircraft are removed from being active and synchronized, and replaced with the next group of gateway stations and ground base stations along the route. Thus, the active group includes ground base stations from more than one geographic area.

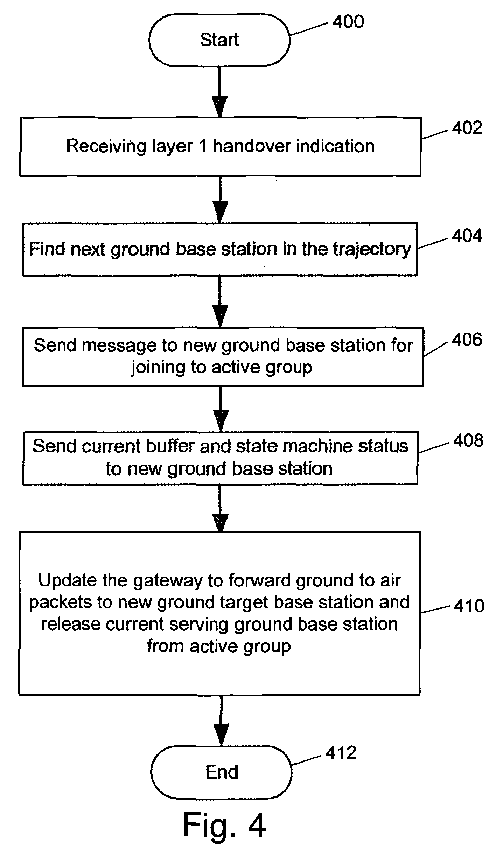

The specific procedure may be better understood from the flow chart in Fig. 4. After activation (step 400), the serving ground base station generates a handover indication or signal (step 402). For example, referring to Fig. 3, the serving ground base station GS2 generates a handover signal that it sends over communication channel 305 to GW 2. Thereafter, GW2 communicates via backbone 309 to the Management Entity 330 which identifies the next in line ground base station based on the flight plan or trajectory of the particular aircraft, (step 404). A message (or signal) is sent via backbone 309, GW2, and communication channel 305 to the new ground base station GS3 for it to join the active group of ground base stations (step 406). Current buffer and state machine status information is sent via communication channel 306 from the presently active ground base station GS2 to the new ground base station GS3 (step 408). The gateway GW2 is updated by Management Entity 330 to forward ground to air packets to the new ground target base station and the old ground base station GS1 is discontinued from the active group of ground base stations (step 410). As the aircraft travels along its route, steps 302 to 310 are continually repeated. The process is ended (step 412) when the aircraft arrives at its destination.

The embodiment of the network topology described above with reference to Fig. 3 and Fig. 4 is a simplified model meant to illustrate the handover procedure of the invention. Many variations of this model are possible. For example, the active group may comprise many more ground base stations and more gateway stations can be in communication with them. Gateway Stations, i.e. the components that perform the tasks of the gateway station, can reside within ground base stations or can be, as illustrated herein, in external entities that control more than one ground base station.

It should be appreciated that at any give point in time, there is usually not just a single aircraft in the air in a geographical region. Instead there are typically many, each of which has its own route and its own communications needs. Thus the system must take into account that multiple aircraft may be in a particular geographic area at the same time. For example, referring to Fig. 2, aircraft 201a and 201b may both be in geographic area 203c at the same time. Multiple aircraft may be utilizing the same ground base station and/or the same gateway station. Therefore, there is also a requirement for load balancing, so that the system does not overload any particular station, but, instead, spreads out the load over as many stations as is practical.

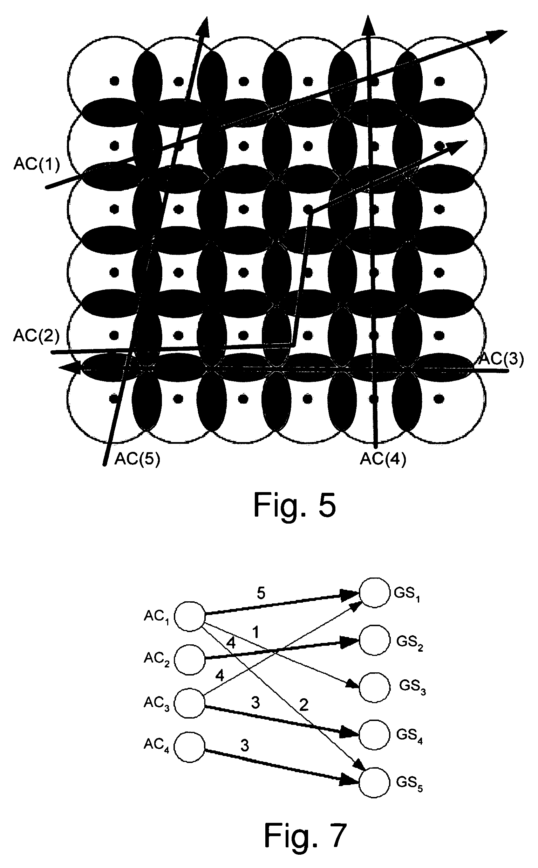

Fig. 2 illustrates a simplified situation in which the two aircraft are flying along parallel straight trajectories. Fig. 5 shows a more realistic two-dimensional situation. At the time shown five different aircraft are traveling with different trajectories across an area served by 36 ground base stations (dark dots in the figure). For purposes of the example, the coverage area of each of the ground stations (circles centered on each ground station) is equal. Based on Fig. 5 the concept of load balancing is now illustrated. By way of example, consider a set A of aircraft (AC) and a set N of ground base stations (BS). Each aircraft, AC(i), is moving along a given trajectory which is covered by an overlapping subset

$N(i) \subseteq N$ of ground base stations. Several possible trajectories are shown for several aircraft. Deeply shaded regions in Fig. 5 are areas of overlapping coverage that can be served by more than one ground base station. Each aircraft needs to select a serving ground base station from the available set of ground base stations. As shown, each trajectory is converted to a set of non-overlapping time intervals of two types. Type I is a time interval with no option of ground base station selection (i.e. areas that are covered by a single ground base station). Type II is a time interval with selection options (i.e. areas covered by more than one ground base station). The arrows in Fig. 5 represent the trajectory of each aircraft with relation to a reference timeline. The tail of each arrow denotes the location of the aircraft at a reference time, and the body of each arrow denotes the expected present location of the aircraft, depending of its velocity. Two crossing arrows may represent the case where two different aircraft visit the same geographical location. Such crossing can be simultaneous, which means that two aircrafts are in proximity of each other at a certain instant of time, or such crossing is sequential, in sense that the aircraft visit the same geographical location in different instants of time.

To affect load balancing the time intervals of the second type (Type II) have to be determined for aircraft simultaneously crossing the same geographical region. For each aircraft there is a need to determine when to execute a handover and a need to determine which ground base station to select. The goal is to minimize the number of aircraft that are simultaneously served by the same ground base station, thereby defining a maximal bandwidth for each aircraft. The decision regarding ground base station selection per aircraft can be made in advance in an "offline" manner. Such decisions can be made by the Management Entity in the gateway computer using information of the expected flight plans of all the aircraft expected to fly over a given geographical region supplied by the Management Entity. However, changes in trajectories may occur during the flight. In addition, the time of which the aircraft will enter the coverage area of a certain ground station may also change, e.g. due to change of scheduled departure time or the velocity of the aircraft. Such a time change will affect the coverage intervals timeline of the aircraft and can affect the GS selection previously made offline. "Online" data concerning changes in trajectory or velocity response are sent from the aircraft via the ground stations to the gateway computer, which is able to re-assign the aircraft to different GSs. Alternatively, the online data from the aircraft can be forwarded to the Management Entity, which performs the reassignment and forwards the new assignment to the appropriate gateway station and ground station.

The j-th coverage interval (CI) for an Aircraft AC(i) is defined as the tuple $CI_j(i) = \langle t_j^i, t_{j+1}^i, N_j^i \rangle$ where $t_j^i < t_{j+1}^i$ and $t_j^i$ and $t_{j+1}^i$ are the start and end times of the coverage interval, respectively, and $N_j^i \subseteq N$ is a sub set of ground base stations which can serve Aircraft $i$ during $t_j^i \le t \le t_{j+1}^i$. A Trajectory Traj(i) for Aircraft $i$ is defined as a sequence of consecutive coverage intervals as follows: $Traj(i) = \left\{ \langle t_1^i, t_2^i, N_1^i \rangle, \langle t_2^i, t_3^i, N_2^i \rangle, \dots \right\}$.

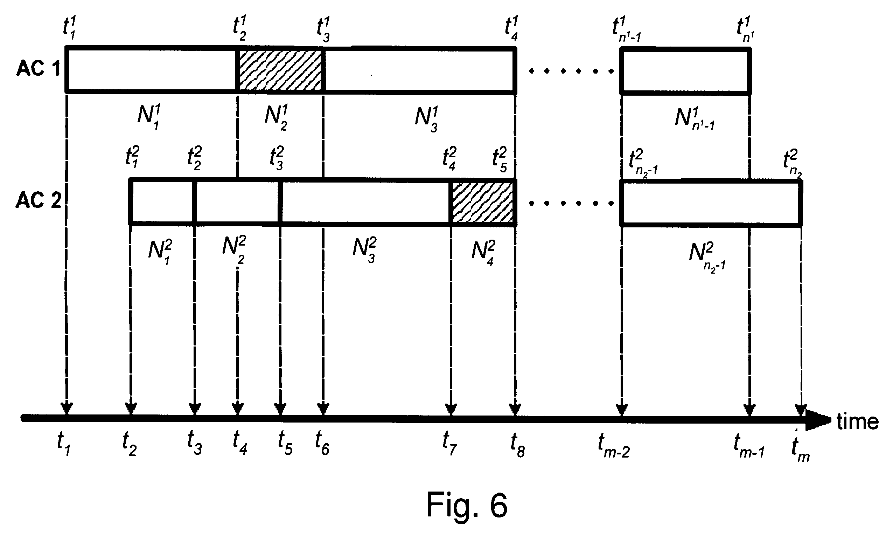

Trajectories of two aircraft are shown, by way of example, in Fig. 6. Type I coverage intervals are denoted by diagonal filling and Type II coverage intervals are denoted by solid filling. Between each two Type I coverage intervals, there must be at least one Type II coverage interval. In particular, the coverage areas of each two neighboring ground base stations overlap. In Fig. 6, the time axis is composed from the superposition of coverage intervals of the given trajectories. A decision point $t_i$ is defined as the i-th event in which one of the aircraft is either entering or leaving a coverage interval. At each decision point, a new assignment of aircraft and ground base stations needs to be considered.

An aircraft $AC_i \subseteq A$ is defined to be active at time $\tau$ $if \exists CI_k(i)\{CI_k(i) \in Traj(i) \wedge t_k^i \le \tau \le t_{k+1}^i\}$. If AC($\tau$) denotes a set of all aircraft which are active at time $\tau$, then GS n $\subseteq N$ is defined to be active at time $\tau$ if $\exists CI_k(i)\{CI_k(i) \in Traj(i) \wedge t_k^i \le \tau \le t_{k+1}^i \wedge n \in N_k^i\}$. If $N(\tau)$ denotes a set of all GSs which are active at time $\tau$, then the assignment of aircraft to GSs at decision point $t_j$ can be represented as an assignment problem on a $G_j = (A_j \dot\cup N(t_j), E_j)$, where $A_j = AC(t_j)$, and

$$e = \{AC_i, N_j\} \in E \Leftrightarrow \exists CI_k(i)\{CI_k(i) \in Traj(i) \wedge t_k^i \le t_j \le t_{k+1}^i \wedge N_j \in N_k^i\}.$$

Wherein, $G_j$ denotes a bi-partite graph whose vertices are the disjoint union of GSs and aircrafts that are active at decision point $t_j$ and its edges set Ej represents all edges between the aircrafts and their active GSs, i.e. all GSs included within the coverage interval of each aircraft). Fig. 7 is an example of a Gj.

In addition a weight function w, which maps a real value to each edge $e \in E_j$ is defined. A weight $w(e)$ for the pair (edge) $e = \{AC_i, N_j\}$ represents the desirability of assignment of $AC_i$ to GS $N_j$.

Such a desirability function can represent, for example, continuation of connection to a GS which was connected with the AC at a preceding decision point or the fact that handing over the AC to a different GS will incur some system penalty, e.g. a delay in arrival time at the destination. Another example of the use of the weight function is the case where multiple GSs from different airline operators are associated with the coverage interval of the AC. In such case, the weight function can represent a preference to connect the AC to a GS belong to a certain operator.

A feasible solution of the assignment problem for a given $G_j$ is a sub-graph $G_j^{'} = (A_j \cup N_j, E_j^{'})$ where $deg(v) \leq 1, \forall v \in A_j$.

The weight of a feasible solution $G_j^{'}$ is defined as $\sum_{e \in E_j^{'}} w(e)$. Naturally, a solution having maximal weight is sought.

In an embodiment of the assignment problem a load balancing requirement is represented by trying to equalize the degree of each vertex in $N_j$, which relates to the number of aircrafts that are served by each BS.

Fig. 7 is bi-partite graph illustrating solutions to the problem of load balancing for a particular set of aircraft and a set of ground base stations. The circles on the left edge of Fig.7 represent four aircraft and the circles on the right edge represent five ground stations. The arrows originating on a circle representing an aircraft and ending on a circle representing a ground station signify that, at the time represented by the graph, the aircraft is flying over the coverage area of that ground station. The numbers above each line are the weights assigned to the assignment of a specific aircraft to a specific ground station and the dark arrows are the solutions to the load balancing problem as determined by the computer of the Management Authority (or the computer of the gateway) following the above described procedure.

In the example of Fig. 7: $AC_1$ is flying over the coverage area of GS1, GS3, and GS5; $AC_2$ over GS2 only; $AC_3$ over GS1 and GS4; and $AC_4$ over GS5 only. The solution of the load balancing problem for $AC_2$ and $AC_4$ are obvious. Both $AC_1$ and $AC_3$ could be assigned to GS1 however the weight for $AC_1$ is higher; therefore $AC_1$ is assigned to GS1. $AC_3$ could be assigned to either GS1 or GS4 however since $AC_1$ has already been assigned to GS1 and since no aircraft have been assigned to GS4 then $AC_3$ is assigned to GS4. This assignment is made despite the fact that the weight for this assignment is less than that for the assignment to GS1. In other circumstances, for example when both GS1 and GS4 had no aircraft assigned to them, then the system would have assigned $AC_3$ to GS1, instead of to GS4 as in the present case.

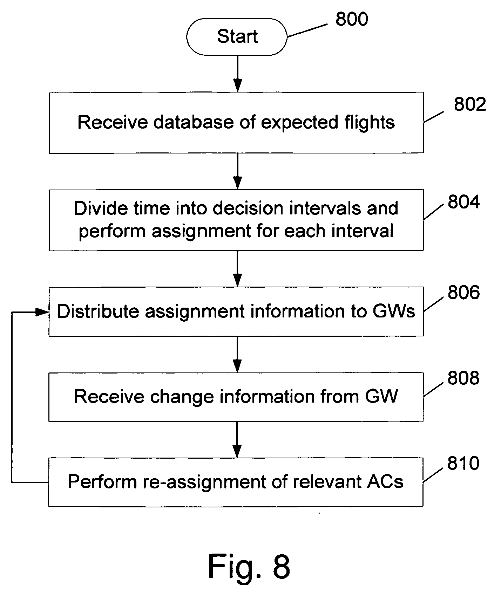

Fig. 8 is a flow diagram showing the load balancing process carried out by the Management Entity. After initiating the process in step 800, a database that includes data such as flight number, time schedules, and trajectories of expected flights is entered into the processing unit of the Management Entity (step 802). For each plane, the time of flight is divided into decision intervals (see Fig. 6) and an assignment to a ground station is made for each plane for each interval (Fig.7) in step 804. The Management Entity distributes the assignment information to the appropriate Gateway Station via the system backbone (step 806). In step 808 the gateway stations receive online data related to their current speed and direction of travel from the aircraft and transmit this data to the Management Entity. In step 810 the Management Entity repeats step 804 using the online data to update the database and reassigns the aircraft that are not following their originally scheduled flight path to different ground stations if necessary. The reassignment information is transmitted to the gateways and steps 806 to 810 are repeated cyclically.

Although embodiments of the invention have been described by way of illustration, it will be understood that the invention may be carried out with many variations, modifications, and adaptations, without exceeding the scope of the claims.

**Claims**

1. A method for fast and seamless handover in wireless communications between ground base stations (300a...300n) and an aircraft (301), comprising the steps of:

   a. identifying ground base stations (300a...300n) along the flight path (302) of said aircraft (301);
   b. defining a group of active ground base stations in a geographic area in which said aircraft (301) is traveling;
   c. using a load balancing method to select for said aircraft (301) a serving ground base station from amongst said group of active ground base stations;
   d. maintaining communications between said serving base station and said aircraft (301); and
   e. synchronizing all active ground base stations such that all ground to air data is forwarded to all of said active ground base stations.

2. A method according to Claim 1, further comprising:

   a. identifying new target ground base stations when said aircraft (301) approaches a new geographic area along the flight path (302);
   b. adding the newly identified target ground base stations to said group of active ground base stations; and

c. deleting from said group of active ground base stations ground base stations that have already been passed on the flight path (302).

3. A method according to Claim 1, wherein the serving ground base station for a given aircraft (301) is selected from among the group of active ground base stations by either a gateway station (GW1...GWn) or a Management Entity (330).

4. A method according to Claim 3, wherein the decision regarding ground base station selection per aircraft is made in advance in an "offline" manner based on the expected flight plans of all the aircraft expected to fly over a given geographical region.

5. A method according to Claim 4, wherein online data concerning changes in trajectory or velocity are sent from the aircraft (301) via the ground stations to the gateway computer (GW1...GWn) and Management Entity (330), either of which is able to re-assign the aircraft (301) to different ground stations (300a...300n).

6. A method according to Claim 1, wherein the load balancing method comprises selecting the active ground base station that is serving the fewest other aircraft as the serving ground base station.

7. A system for fast and seamless handover in wireless communications between ground base stations (300a-300n) and an aircraft (301), comprising the following entities:

   a. a Management Entity (330);
   b. a plurality of gateway stations (GW1...GWn) along the flight path (302) of an aircraft (301);
   c. a plurality of ground base stations (300a...300n) along the flight path (302) of said aircraft (301);
   d. communication links (304,305,306,307,309) between said entities comprising said system;

wherein a group of active ground base stations including a serving base station for said aircraft (301), which is selected by a load balancing method from amongst said group of active ground base stations, is located in a geographic area in which said aircraft (301) is traveling and all ground to air data communicated between said serving base station and said aircraft (301) is forwarded by a gateway station to all ground base stations in said group.

**Patentansprüche**

1. Verfahren zum schnellen und nahtlosen Handover in der drahtlosen Kommunikation zwischen Bodenbasisstationen (300a...300n) und einem Luftfahrzeug (301), umfassend die Schritte:

   a. Identifizieren von Bodenbasisstationen (300a...300n) entlang des Flugweges (302) des Luftfahrzeugs (301);
   b. Definieren einer Gruppe von aktiven Bodenbasisstationen in einem geographischen Gebiet, in dem sich das Luftfahrzeug (301) bewegt;
   c. Verwenden eines Lastverteilungsverfahrens, um für das Luftfahrzeug (301) eine versorgende Bodenbasisstation aus der Gruppe aktiver Bodenbasisstationen auszuwählen;
   d. Aufrechterhalten der Kommunikation zwischen der versorgenden Basisstation und dem Luftfahrzeug (301); und
   e. Synchronisieren aller aktiven Bodenbasisstationen derart, dass alle Boden-an-Luft-Daten an alle aktiven Bodenbasisstationen übermittelt werden.

2. Verfahren nach Anspruch 1, weiterhin umfassend:

   a. Identifizieren neuer Zielbodenbasisstationen, wenn sich das Flugzeug (301) einem neuen geographischen Gebiet entlang des Flugweges (302) nähert;
   b. Hinzufügen der neu identifizierten Zielbodenbasisstationen zu der Gruppe von aktiven Bodenbasisstationen; und
   c. Löschen der Bodenbasisstationen, die auf dem Flugweg (302) bereits passiert wurden, aus der Gruppe der aktiven Bodenbasisstationen.

3. Verfahren nach Anspruch 1, bei dem die versorgende Bodenbasisstation für ein bestimmtes Luftfahrzeug (301) entweder durch eine Gateway-Station (GW1...GWn) oder durch eine Management-Entity (330) aus der Gruppe der aktiven Bodenbasisstationen ausgewählt **wird.**

4. Verfahren nach Anspruch 3, bei dem die Entscheidung über die Bodenbasisstationsauswahl pro Flugzeug im Voraus in einer "offline" Art und Weise auf der Grundlage der erwarteten Flugpläne aller Luftfahrzeuge, die voraussichtlich ein bestimmtes geographisches Gebiet überfliegen, getroffen wird.

5. Verfahren nach Anspruch 4, bei dem Online-Daten über Veränderungen der Flugbahn bzw. Geschwindigkeit vom Luftfahrzeug (301) über die Bodenstationen an den Gateway-Rechner (GW1...GWn) und die Management-Entity (330) gesendet werden, von denen jede(r) in der Lage ist, das Luftfahrzeug (301) verschiedenen Bodenstationen (300a...300n) neu zuzuweisen.

6. Verfahren nach Anspruch 1, bei dem das Lastverteilungsverfahren das Auswählen derjenigen aktiven Bodenbasisstation als versorgende Bodenbasisstation umfasst, die gerade die wenigsten weiteren Luftfahrzeuge versorgt.

7. Ein System für das schnelle und nahtlose Handover bei der drahtlosen Kommunikation zwischen Bodenbasisstationen (300a-300n) und einem Luftfahrzeug (301), umfassend die folgenden Entitäten:

    a. eine Management-Entity (330);
    b. eine Mehrzahl von Gateway-Stationen (GW1...GWn) entlang des Flugweges (302) eines Luftfahrzeugs (301);
    c. eine Mehrzahl von Bodenbasisstationen (300a...300n) entlang der Flugbahn (302) des Luftfahrzeugs (301);
    d. Kommunikationsverbindungen (304, 305, 306, 307, 309) zwischen den das System umfassenden Entitäten;

wobei eine Gruppe aktiver Bodenbasisstationen, mit einer versorgenden Basisstation für das Luftfahrzeug (301), welche durch ein Lastverteilungsverfahren aus der Gruppe aktiver Bodenbasisstationen ausgewählt wird, in einem geographischen Gebiet liegt, in dem sich das Luftfahrzeug (301) bewegt, und alle Boden-an-Luft-Daten, die zwischen der versorgenden Basisstation und dem Luftfahrzeug (301) kommuniziert werden, durch eine Gateway-Station an alle Bodenbasisstationen in der Gruppe weitergeleitet werden.

## Revendications

1. Procédé pour le transfert rapide et sans interruption dans des communications sans fil entre des stations de base au sol (300a... 300n) et un aéronef (301), comprenant les étapes consistant à :

    a. identifier des stations de base au sol (300a... 300n) le long de la trajectoire de vol (302) dudit aéronef **(301)** ;
    b. définir un groupe de stations de base au sol actives dans une zone géographique dans laquelle ledit aéronef (301) se déplace ;
    c. utiliser un procédé d'équilibrage de charge pour sélectionner pour ledit aéronef (301) une station de base au sol de desserte parmi ledit groupe de stations de base au sol actives ;
    d. maintenir des communications entre ladite station de base de desserte et ledit aéronef (301) ; et
    e. synchroniser toutes les stations de base au sol actives de telle sorte que toutes les données sol-air sont transférées à toutes lesdites stations de base au sol actives.

2. Procédé selon la revendication 1, comprenant en outre :

    a. l'identification de nouvelles stations de base au sol cibles lorsque ledit aéronef (301) approche d'une nouvelle zone géographique le long de la trajectoire de vol (302) ;
    b. l'ajout des stations de base au sol cibles nouvellement identifiées audit groupe de stations de base au sol actives ; et
    c. supprimer dudit groupe de stations de base au sol actives les stations de base au sol qui ont déjà été passées sur la trajectoire de vol (302).

3. Procédé selon la revendication 1, dans lequel la station de base au sol de desserte pour un aéronef (301) donné est sélectionnée dans le groupe de stations de base au sol actives par soit une station passerelle (GW1... GWn) soit une entité de gestion (330).

4. Procédé selon la revendication 3, dans lequel la décision concernant la sélection de stations de base au sol par aéronef est faite à l'avance d'une manière « hors ligne » sur la base des plans de vol prévus de tous les aéronefs censés survoler une région géographique donnée.

5. Procédé selon la revendication 4, dans lequel des données en ligne concernant des changements de trajectoire ou de vitesse sont envoyées depuis l'aéronef (301) via les stations au sol à l'ordinateur passerelle (GW1... GWn) et à l'entité de gestion (330), l'un ou l'autre étant en mesure de réaffecter l'aéronef (301) à différentes stations au sol (300a... 300n).

6. Procédé selon la revendication 1, dans lequel le procédé d'équilibrage de charge comprend la sélection de la station de base au sol active qui sert le moins de desserte à un autre aéronef en tant que station de base au sol de desserte.

7. Système pour le transfert rapide et sans interruption dans des communications sans fil entre des stations de base au sol (300a - 300n) et un aéronef (301), comprenant les entités suivantes :

    a. une entité de gestion (330) ;
    b. une pluralité de stations passerelles (GW1... GWn) le long de la trajectoire de vol (302) d'un aéronef (301) ;
    c. une pluralité de stations de base au sol (300a... 300n) le long de la trajectoire de vol (302) dudit aéronef (301) ;
    d. des liaisons de communication (304, 305, 306, 307, 309) entre lesdites entités comprenant ledit système ;

dans lequel un groupe de stations de base au sol actives comprenant une station de base de desserte pour ledit aéronef (301), qui est sélectionnée par un procédé d'équilibrage de charge dans ledit groupe de stations de base au sol actives, est situé dans une zone géographique dans laquelle ledit aéronef (301) se déplace et toutes les données sol-air communiquées entre ladite station de base de desserte et ledit aéronef (301) sont transférées par une station passerelle à toutes les stations de base au sol dans ledit groupe.

# Fig. 1
## Prior Art

# Fig. 2

# Fig. 3

```
        ╭──────────────╮  ╱ 400
        │    Start     │
        ╰──────┬───────╯
               │
               ▼
   ┌───────────────────────────────────┐  ╱ 402
   │  Receiving layer 1 handover indication │
   └───────────────┬───────────────────┘
                   │
                   ▼
   ┌───────────────────────────────────┐  ╱ 404
   │ Find next ground base station in the trajectory │
   └───────────────┬───────────────────┘
                   │
                   ▼
   ┌───────────────────────────────────┐  ╱ 406
   │ Send message to new ground base station for │
   │        joining to active group     │
   └───────────────┬───────────────────┘
                   │
                   ▼
   ┌───────────────────────────────────┐  ╱ 408
   │ Send current buffer and state machine status │
   │      to new ground base station    │
   └───────────────┬───────────────────┘
                   │
                   ▼
   ┌───────────────────────────────────┐
   │  Update the gateway to forward ground to air │
   │ packets to new ground target base station and │  ╱ 410
   │  release current serving ground base station │
   │          from active group         │
   └───────────────┬───────────────────┘
                   │
                   ▼
        ╭──────────────╮  ╱ 412
        │     End      │
        ╰──────────────╯
```

# Fig. 4

Fig. 5

Fig. 7

Fig. 6

EP 2 278 732 B1

Fig. 8

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20070218842 A
- US 20080188223 A
- US 2006229104 A1